# EUROPEAN PATENT APPLICATION

(11) **EP 4 372 638 A1**
(43) Date of publication of application: **22.05.2024**
(21) Application number: 22842549.2
(22) Date of filing: 19.05.2022
(51) Int. Cl.: G06Q 10/06, G06Q 50/02

(54) **METHOD OF ALLOCATING MACHINE RESOURCES DURING THE EXECUTION OF FARMING OPERATIONS**

(30) Priority: 15.07.2021 RU 2021120876
(71) Applicant: Obschestvo S Ogranichennoi Otvetstvennostyu "Artexim" (OOO "Artexim"), Yerevan, 0033 (AM)
(72) Inventor: NALBANDYAN, Armen Vemirovich, Bataysk, 346884 (RU)
(74) Representative: Osmans, Voldemars
(86) International application number: PCT/RU2022/000166
(87) International publication number: WO 2023/287320

(57) **Abstract**

The invention relates to the field of logistics, particularly to methods of allocating machine resources. More specifically, the invention pertains to methods of allocating machine resources during farming operations.

A method of allocating machine resources during the execution of farming operations includes: requesting from a user, with the aid of a computer, information relating to at least one field and information relating to the machines planned to be used to carry out farming operations, or obtaining, from accessible sources, information relating to at least one field and information relating to machines that can be used to carry out the farming operations; processing the aforesaid information using an algorithm for calculating optimal solutions; displaying to the user optimal solutions for managing the machine resources; requesting from the user information about which of the proposed optimal solutions will be accepted; and, on the basis of the solutions accepted by the user, displaying to the operators of each individual machine, with the aid of computers, a procedure for the execution of operations.

The proposed invention makes is the automation of calculating optimal decisions influencing the allocating machine resources, provide the allocation of machinery resources, and controlling machine movement trajectories.

## Description

### TECHNICAL FIELD

The invention relates to the field of logistics, particularly to methods of allocating machine resources. More specifically, the invention pertains to methods of allocating machine resources during farming operations.

### PRECEDING LEVEL OF TECHNOLOGY

Currently, methods are known for allocating machine resources during farming operations, wherein the allocation of all available machinery among fields requiring processing is carried out by individuals.

Such methods are not efficient because it is difficult for a human to assess a multitude of factors that affect the outcome, sometimes making it impossible. As a result, this leads to suboptimal decision-making and lower yields and income.

The goal set by the developer of the method for allocating machine resources during farming operations is to create a method that would automate the calculation of optimal decisions influencing the allocating of machinery resources, ensure the allocation of machinery resources, and provide control over machine movement trajectories.

The technical result of the claimed method for allocating machine resources during farming operations is the automation of calculating optimal decisions influencing the allocating machine resources, provide the allocation of machinery resources, and controlling machine movement trajectories.

### DISCLOSURE OF INVENTION

The essence of the method for distributing machinery resources during agricultural operations according to the first embodiment lies in the following.

Initially, using a computer, information related to at least one field and information associated with the machinery intended for farming operations is requesting from the user, or obtained from available sources related to at least one field and information about machinery that can be used for farming operations.

Then, using a computer, the aforementioned information is processed employing algorithms to calculate optimal decisions.

Subsequently, the optimal decisions for managing machinery resources are displayed to the user.

Next, the user is prompted for information regarding which of the proposed optimal decisions will be accepted.

Following the user's accepted decisions, computer systems display to each individual machine operator the schedule for carrying out the work. The essence of the method for allocating machine resources during farming operations according to the second embodiment is as follows.

Initially, using a computer, information related to at least one field and information associated with machinery intended for farming operations is requested from the user, or obtained from available sources related to at least one field and information about machinery that can be used for farming operations.

Then, using a computer, the aforementioned information is processed using algorithms to calculate optimal decisions. Following this, the optimal decisions for managing machinery resources are displayed to the user.

Next, the user is prompted for information regarding which of the proposed optimal decisions will be accepted. Then, based on the user-accepted decisions, the work schedule is automatically transmitted to the autopilot of at least one machine.

The essence of the method for allocating machine resources during farming operations according to the third embodiment is as follows.

Initially, using a computer, information related to at least one field and information associated with machinery intended for farming operations is requested from the user, or obtained from available sources related to at least one field and information about machinery that can be used for farming operations.

Then, the aforementioned information is processed using a computer, employing algorithms to calculate optimal decisions.

Subsequently, the most optimal decision for allocating machine resources is automatically determined using a computer. Then, based on the accepted optimal decisions, the work schedule is displayed to each individual machine operator using computers. Alternatively, based on the accepted optimal decisions, the work schedule is automatically transmitted to the autopilot of at least one machine.

Any of the above-described embodiments of the claimed method imply that:
During the execution of farming operations, data related to farming operations can be automatically obtained from machines utilized for conducting farming operations.

During the execution of farming operations, compliance with procedures can also be automatically monitored using geolocation. If at least one machine deviates from the procedures, information regarding the deviation is displayed to the user and the operator of the respective machine. Alternatively, information about the deviation is displayed to the user, and the corresponding information is transmitted to the autopilot of the machine that deviated from the procedures. Alternatively, automatic adjustments in controlling such a machine can be made using a computer to ensure compliance with the procedures.

During the execution of farming operations, periodic recalculations of optimal decisions for managing machinery resources can also be automatically performed, considering changing conditions. Calculations for optimal decisions can also incorporate data related to weather conditions, machinery malfunctions, and other factors influencing farming operations.

To implement the described method, a centralized or decentralized computer system can be used. When using a centralized computer system, in areas without server connectivity, within a limited radius, local communication can be utilized for data exchange between machines. Each machine stores accumulated information and received data from other machines within this radius. Upon entering the server's communication range, any machine employed for farming operations transmits the stored farming data to the server via this machine and retrieves updated information. Subsequently, this machine shares the updated data with other machines within the local communication radius.

### EXAMPLE OF A SPECIFIC APPLICATION OF THE INVENTION

The claimed method of allocating machine resources during farming operations is as follows. To implement the method in the first embodiment, initially, information related to at least one field and information associated with machinery intended for farming operations is requested from the user using a computer. Alternatively, this information is obtained from available sources related to at least one field and information about machinery that can be used for farming operations.

Information can be requested from the user using any computers, including devices such as tablets, mobile phones, etc. Information related to at least one field includes details such as the number of fields, the area of each field, the shape of each field, the types of crops grown on these fields, soil fertility for each field, and so on.

Information related to machinery intended for farming operations includes details about the units of equipment that will be used for conducting farming operations. Such equipment may consist of farming machinery like combines, seeders, fertilizer spreaders, etc., as well as conventional vehicles such as trucks, cars, and so on.

Moreover, information related to machinery intended for conducting farming operations includes details about the specifications of each unit of equipment. For instance, if it concerns combines, additional details such as the cutting width, tank capacity, grain hopper capacity, and so forth, are requested if this information is not available from open sources or databases.

In other words, any information that could influence the calculation of optimal values for conducting farming operations is requested. Available information sources may be utilized, and only the information that was not previously accessible is requested.

Available information sources may include data from government registries, information acquired through various sensors installed on machinery or fields, and so on. It is evident that if all the aforementioned necessary data for calculations are available, there will be no need to request this data from the user.

Then, after requesting the aforementioned information from the user or obtaining such information from available sources, this information is processed using a computer employing algorithms for calculating optimal decisions. The computer automatically calculates optimal decisions based on a variety of algorithms.

Afterward, the optimal decisions for managing machine resources, calculated by the computer, are displayed to the user. For instance, using mobile phones, desktop computers, etc., the most optimal options for allocating machine resources are displayed.

Such optimal options include work schedules for each machine, such as the trajectory of movement for all machines, the recommended speed of their movement, interactions between the machines. If there are multiple fields to process, the allocation of machines among the fields, etc.

Next, the user is asked for information about which of the calculated optimal decisions will be adopted. Using their computer, the user can select the decision they believe is best among the proposed options and indicate this choice within the program.

Then, based on the user's accepted decisions, instructions for performing tasks are displayed to the operators of each individual machine using computers. For these purposes, an onboard computer may be installed inside each machine, or operators can utilize mobile devices equipped with software for exchanging information with the server or another device that transmits work instructions.

The second method of implementing the invention differs from the first only in that it uses autopilot machines. Instead of displaying the aforementioned information to the operators, this information is transmitted to the autopilot of at least one machine. The autopilot of the machine then uses this information for its operation.

The third embodiment of the invention differs from the first embodiment in that instead of the user making decisions, the computer makes the decisions. Consequently, optimal decisions for managing machine resources are not displayed to the user, and no information is requested from the user about which of the proposed optimal decisions will be accepted.

Instead, the third embodiment of the invention implies that the most optimal decision for allocating machine resources is automatically made by the computer. In this case, similar to the second embodiment of the invention, the third embodiment allows for the use of autopilot.

In the third embodiment of the invention, the computer that makes the most optimal decision for allocating machine resources can be a server. Such a server can serve as a centralized autopilot for all machines, transmit control information to the autopilots of each machine, or provide this information to machine operators.

The invention in any embodiment, for achieving more precise calculation results and control of farming operations, also involves the possibility of using additional actions described below.

During farming operations, data related to farming operations can be automatically obtained from machines used for conducting farming operations.

These data can include, for example, the speed of machine movement, machine malfunctions, etc.

During farming operations, adherence to the aforementioned procedures can also be automatically monitored. For instance, the trajectory of machine movement is monitored using geolocation. If at least one machine deviates from the procedure, information about the deviation is displayed to the user and the machine operator. Additionally, adjustments in controlling such a machine are automatically performed by the computer to ensure compliance with the procedure.

In this case, for instance, if a machine deviates from its route, both the machine operator and the user will be aware, enabling them to promptly react by taking necessary actions, including, for instance, recalculating and adopting new optimal decisions based on the current situation.

To automatically control the trajectory of machine movement, for instance, a template of user-accepted machine movement trajectories with coordinates can be stored and compared to the actual coordinates of the machine's movement trajectory. In case of any deviation between the coordinates, within specified margins, the deviation is recorded, and if necessary, the user and machine operators are automatically notified. In the context of this invention, the machine operator is also considered a user, but as a user without decision-making rights. Therefore, within the context of this invention, the machine operator should be perceived as a user without the authority to select optimal decisions.

During farming operations, periodic automatic re-evaluation of optimal decisions for managing machine resources may occur, taking into account the changing conditions of farming operations. For instance, these changing conditions may involve weather variations, machinery breakdowns, or any force majeure situations.

When calculating optimal decisions, data related to weather, machinery malfunctions, and other factors influencing farming operations may also be taken into account.

To a specialist, it will also be evident that for the implementation of the described invention, a centralized or decentralized computer system may be used.

When using a centralized computer system, in areas without server connectivity, within a limited radius, local communication can be used between machines. This allows each machine to store the accumulated information and data received from other machines. When a machine, used for farming operations, enters the server connectivity radius, it transmits the stored farming data to the server and retrieves updated information. This updated data is then transmitted to other machines when the machine with the updated data is within the local communication range of the other machines.

Local communication can be, for instance, Wi-Fi connectivity, while for server communication, they may use mobile networks, satellite internet, and other types of connections capable of establishing communication with a server located at a significant distance from the machines.

For instance, in fields where farming operations is conducted, mobile and satellite communication might be absent. Hence, machines can use Wi-Fi connectivity to exchange data among themselves. During farming operations, some machines may enter areas covered by mobile or satellite networks. For instance, trucks might access mobile or satellite networks when transporting crops from the field. During this time, trucks can transmit all the data to the server and, if necessary, receive updated information.

The examples provided in the description cannot limit the invention and are only intended for a general understanding of the invention.

### INDUSTRIAL APPLICABILITY

Through the use of computers and calculation algorithms, automation of calculating optimal decisions that affect the allocating of machinery resources is achieved, thereby ensuring the allocating of machine resources. Control over machine movement trajectories is facilitated by utilizing geolocation and automatic monitoring of adherence to these trajectories.

## Claims

1. A Method of allocating machine resources during the execution of farming operations, wherein
initially, using a computer, information associated with at least one field and information regarding machines intended for farming operations is requested from the user, or received information from available sources related to at least one field and information related to machines that can be used for farming operations,
then, using a computer, the above mentioned information is processing using algorithms for calculating optimal decision,
after that, optimal decision for managing machine resources are displayed to the user,
then, request information from the user about which of the proposed optimal decision will be accepted
then, based on the decisions accepted by the user, the work procedures are displayed to each individual machine operator with the help of computers.

2. The method of allocating machine resources during the execution of farming operations according to claim 1, wherein during the execution of farming operations, data related to farming operations is automatically receiving from machines using for execution farming operations.

3. The method of allocating machine resources during the execution of farming operations according to claim 2, wherein during the execution of farming operations, compliance with the aforementioned procedures is automatically monitored, if at least one machine deviates from the procedures, information about the deviation is displayed to the user and the operator of the machine that has deviated.

4. The method of allocating machine resources during the execution of farming operations according to claim 3, wherein during the execution of farming operations, there is an periodic automatically recalculation of optimal decision and procedures for managing machine resources considering the changing conditions of farming operations.

5. The method of allocating machine resources during the execution of farming operations according to claim 4, wherein when calculating optimal decision, data related to weather conditions, machinery malfunctions, and other factors influencing farming operations are also taken into account.

6. The method of allocating machine resources during the execution of farming operations according to claim 5, wherein use a centralized or decentralized computer system.

7. The method of allocating machine resources during the execution of farming operations according to claim 6, wherein when using a centralized computer system in areas without server connectivity, using local communication to exchange data between machines in a way that each machine stores the accumulated information and also stores the information received from other machines
wherein at the moment of entering the connectivity area with the server, any machine which used for execution farming operations, with the help of at least one machine that has entered the connectivity area with the server,
sending to the server the above-mentioned stored data execution farming operations,
and receiving from the server updated data, which, with the help of at least one machine that has received updated data from the server,
transmitting to other machines at the moment when the machine with updated data is within the range of local connectivity with other machines.

8. A method of allocating machine resources during the execution of farming operations, wherein
initially, using a computer, information associated with at least one field and information regarding machines intended for farming operations is requested from the user, or received information from available sources related to at least one field and information related to machines that can be used for farming operations,
then, using a computer, the above mentioned information is processing using algorithms for calculating optimal decision,
after that, optimal decision for managing machine resources are displayed to the user,
then, requesting information from the user about which of the proposed optimal decision will be accepted,
then, based on the user's accepted decision, the work procedures are automatically transmitting to the autopilot of at least one machine.

9. The method of allocating machine resources during the execution of farming operations according to claim 8, wherein during the execution of farming operations, data related to farming operations is automatically receiving from machines using for execution farming operations.

10. The method of allocating machine resources during the execution of farming operations according to claim 9, wherein during the execution of farming operations, compliance with the aforementioned procedures is automatically monitored, if at least one machine deviates from the procedures, information about the deviation is displayed to the user, and this information is transmitted to the autopilot of machine that deviated from procedures.

11. The method of allocating machine resources during the execution of farming operations according to claim 10, wherein during the execution of farming operations, automatically recalculations of optimal decision for managing machine resources are performed periodically, taking into account changing conditions in the execution of farming operations.

12. The method of allocating machine resources during the execution of farming operations according to claim 11, wherein when calculating optimal decision, data related to weather conditions, machinery malfunctions, and other factors influencing farming operations are also taken into account.

13. The method of allocating machine resources during the execution of farming operations according to claim 12, wherein use a centralized or decentralized computer system.

14. The method of allocating machine resources during the execution of farming operations according to claim 13, wherein when using a centralized computer system in areas without server connectivity, using local communication to exchange data between machines in a way that each machine stores the accumulated information and also stores the information received from other machines
wherein at the moment of entering the connectivity area with the server, any machine which used for execution farming operations, with the help of at least one machine that has entered the connectivity area with the server,
sending to the server the above-mentioned stored data execution farming operations,
and receiving from the server updated data, which, with the help of at least one machine that has received updated data from the server,
transmitting to other machines at the moment when the machine with updated data is within the range of local connectivity with other machines..

15. A method of allocating machine resources during the execution of farming operations, wherein
initially, using a computer, information associated with at least one field and information regarding machines intended for farming operations is requested from the user, or received information from available sources related to at least one field and information related to machines that can be used for farming operations,
then, using a computer, the above mentioned information is processing using algorithms for calculating optimal decision,
after that automatically accepting the most optimal solution on the allocation of machine resources using a computer,
then, based on the accepted optimal decision, the work procedures are displaying to operators of each individual machine using computers, or based on the accepted optimal decision, the work procedures are automatically transmitting to the autopilot of at least one machine.

16. The method of allocating machine resources during the execution of farming operations according to claim 15, wherein during the execution of farming operations, data related to farming operations is automatically receiving from machines using for execution farming operations.

17. The method of allocating machine resources during the execution of farming operations according to claim 16, wherein during the execution of farming operations, compliance with the aforementioned procedures is automatically monitored, if at least one machine deviates from the procedures, automatically using a computer make corrections in the control of such a machine to compliance with procedures or notify the operator of any deviations.
corrections in the management of such a machine are automatically made by the computer to ensure compliance, or the operator is notified of the deviation.

18. The method of allocating machine resources during the execution of farming operations according to claim 17, wherein during the execution of farming operations, automatically recalculations of optimal decision for managing machine resources are performed periodically, taking into account changing conditions in the execution of farming operations.

19. The method of allocating machine resources during the execution of farming operations according to claim 18, wherein when calculating optimal decision, data related to weather conditions, machinery malfunctions, and other factors influencing farming operations are also taken into account.

20. The method of allocating machine resources during the execution of farming operations according to claim 19, wherein use a centralized or decentralized computer system.

21. The method of allocating machine resources during the execution of farming operations according to claim 20, wherein when using a centralized computer system in areas without server connectivity, using local communication to exchange data between machines in a way that each machine stores the accumulated information and also stores the information received from other machines
wherein at the moment of entering the connectivity area with the server, any machine which used for execution farming operations, with the help of at least one machine that has entered the connectivity area with the server,
sending to the server the above-mentioned stored data execution farming operations,
and receiving from the server updated data, which, with the help of at least one machine that has received updated data from the server,
transmitting to other machines at the moment when the machine with updated data is within the range of local connectivity with other machines.
